# EUROPEAN PATENT APPLICATION

(11) **EP 4 484 400 A1**
(43) Date of publication of application: **01.01.2025**
(21) Application number: 23759749.7
(22) Date of filing: 13.02.2023
(51) Int. Cl.: C04B 35/596, C04B 35/591

(54) **SILICON NITRIDE SINTERED BODY**

(30) Priority: 25.02.2022 JP 2022028344
(71) Applicant: Kyocera Corporation, Kyoto-shi, Kyoto 612-8501 (JP)
(72) Inventor: HIROSE, Kouhei, Kyoto-shi, Kyoto 612-8501 (JP); SAITO, Shintarou, Kyoto-shi, Kyoto 612-8501 (JP); FUJISAKI, Hiroshi, Kyoto-shi, Kyoto 612-8501 (JP); FURUKUBO, Youji, Kyoto-shi, Kyoto 612-8501 (JP)
(74) Representative: Viering, Jentschura & Partner mbB Patent- und Rechtsanwälte
(86) International application number: PCT/JP2023/004724
(87) International publication number: WO 2023/162746

(57) **Abstract**

The silicon nitride sintered body according to the present disclosure contains silicon nitride particles and yttrium silicon oxynitride particles and has a porosity of 14% or less.

## Description

### TECHNICAL FIELD

The present disclosure relates to a silicon nitride sintered body.

### BACKGROUND OF INVENTION

A silicon nitride sintered body has attracted attention as a raw material having excellent thermal resistance, strength, and hardness and, for example, has been used as a component for an engine.

In recent years, an electric car or the like uses a power module converting and controlling electrical power with high efficiency. A power module needs an insulation substrate having a high thermal conductivity conducting heat generated from a semiconductor element efficiently and high mechanical characteristics withstanding a stress due to temperature cycling in addition to insulation property. As a raw material of an insulation substrate, which satisfies such requirements, the inventors of the present application have previously disclosed a silicon nitride sintered body described in the following Patent Document 1.

### CITATION LIST

### PATENT LITERATURE

Patent Document 1: WO 2005/019133

### SUMMARY

The silicon nitride sintered body according to an aspect of the present disclosure contains silicon nitride particles and yttrium silicon oxynitride particles and has a porosity of 14% or less.

### DESCRIPTION OF EMBODIMENTS

Modes (hereinafter referred to as "embodiments") for implementing a silicon nitride sintered body according to the present disclosure will be described in detail below with reference to the accompanying drawings.

In recent years, for example, an operating temperature of a power module used in an electric car tends to be higher to achieve high efficiency and energy saving. Accordingly, demands exist for a silicon nitride sintered body enabling stable use in an environment at a higher temperature.

The silicon nitride sintered body according to an embodiment contains silicon nitride particles and yttrium silicon oxynitride particles, and has a porosity of 14% or less. The silicon nitride sintered body is further suitable for use in a high temperature environment. Specifically, the silicon nitride sintered body according to an embodiment can maintain a high coefficient of thermal conductivity even in a high temperature environment (e.g., approximately from 100 to 200°C). That is, the silicon nitride sintered body according to an embodiment is suitable for use in a high temperature environment because heat dissipation performance as well as high thermal conductivity can be maintained in a high temperature environment.

The silicon nitride sintered body according to an embodiment may contain at least one selected from the group consisting of Y₆Si₁₁N₂₀O particles (hereinafter, referred to as "phase A"), YSi₃O₃N₄ particles (hereinafter, referred to as "phase B"), Y₄Si₂O₇N₂ particles (hereinafter, referred to as "phase C"), and Y₂Si₃O₃N₄ particles (hereinafter, referred to as "phase D") as the yttrium silicon oxynitride particles.

The silicon nitride sintered body according to an embodiment may contain two selected from the group consisting of the phase A, the phase B, the phase C, and the phase D as the yttrium silicon oxynitride particles. Specifically, the silicon nitride sintered body according to an embodiment may contain two, which are the phase A and the phase B. The silicon nitride sintered body according to an embodiment may contain two, which are the phase C and the phase D.

In the silicon nitride sintered body according to an embodiment, the phase A/the phase B (ratio of the phase A to the phase B) may be 1.4 or more in volume ratio. By the above-mentioned configuration, a silicon nitride sintered body having a coefficient of thermal conductivity at 100°C of 67 W/m·K or more and a coefficient of thermal conductivity at 200°C of 49 W/m·K or more can be obtained.

In the silicon nitride sintered body according to an embodiment, the phase A/the phase B (ratio of the phase A to the phase B) may be 2.0 or more in volume ratio. By the above-mentioned configuration, a silicon nitride sintered body having a coefficient of thermal conductivity at 100°C of 72 W/m·K or more and a coefficient of thermal conductivity at 200°C of 55 W/m·K or more can be obtained.

In the silicon nitride sintered body according to an embodiment, the phase A/the phase B (ratio of the phase A to the phase B) may be 3.0 or more in volume ratio. By the above-mentioned configuration, a silicon nitride sintered body having a coefficient of thermal conductivity at 100°C of 74 W/m·K or more and a coefficient of thermal conductivity at 200°C of 57 W/m·K or more can be obtained.

For the silicon nitride sintered body according to an embodiment, a fracture toughness may be 6.5 MPa·m^{1/2} or more, an isolation voltage may be 10 kV or more, and a three-point bending strength may be 521 MPa or more. By the above-mentioned configuration, a silicon nitride sintered body having excellent magnetic properties can be obtained.

### (Examples)

23.4 wt% of Si₃N₄ powder, 70.2 wt% of Si powder, 4.9 wt% of Y₂O₃, and 1.5 wt% of MgO were mixed, and thus a raw material powder was obtained. Y₂O₃ and MgO are sintering aids. The raw material powder, ethanol, and a medium for silicon nitride grinding were then charged in a barrel mill and mixed. Then, in the obtained slurry, polyvinyl alcohol (PVA) as an organic binding material was added and mixed, and granulated by a spray dryer. The obtained granulated powder was molded at a molding pressure of 80 MPa by a powder press molding method using a metal mold, and degreased at 600°C in N₂, and thus a plurality of molded bodies were obtained.

Then, nitriding process, by which Si in the obtained molded body was nitrided into Si₃N₄, was performed by subjecting the molded body to a thermal treatment at a nitrogen partial pressure (0.3 MPa or 0.6 MPa), a temperature (1350°C), and time (15 hours) listed in Table 1. Thereafter, the temperature was further increased, in a nitrogen partial pressure that was the same as the nitrogen partial pressure for the nitriding process, firing was performed in conditions at a temperature (1900°C, 1925°C, or 1945°C) and time (6 hours or 12 hours) listed in Table 1, and thus each of samples of the present disclosure (No. 1 to No. 5) was obtained.

65.5 wt% of Si₃N₄ powder, 21.9 wt% of Si powder, 11.9 wt% of Y₂O₃, and 0.7 wt% of MgO were mixed, and thus a raw material powder was obtained. Y₂O₃ and MgO are sintering aids. The raw material powder, ethanol, and a medium for silicon nitride grinding were then charged in a barrel mill and mixed. Then, in the obtained slurry, polyvinyl alcohol (PVA) as an organic binding material was added and mixed, and granulated by a spray dryer. The obtained granulated powder was molded at a molding pressure of 80 MPa by a powder press molding method using a metal mold, and degreased at 600°C in N₂, and thus a plurality of molded bodies were obtained.

Then, a nitriding treatment was performed for the obtained molded body at a normal pressure in conditions listed in Table 1. Note that, for Sample No. 8, nitriding process, by which Si in the molded body was nitrided into Si₃N₄, was performed by a thermal treatment in conditions at 1100°C to 1400°C for 40 hours. Thereafter, firing was performed in conditions at 0.7 MPa and 1900°C for 12 hours, and thus a sample of the present disclosure (No. 8) was obtained. Note that "1100°C to 1400°C" means that the thermal treatment was performed while the temperature was increased from 1100°C to 1400°C over 40 hours.

Table 1 lists Samples No. 6 and No. 7 as Comparative Examples. Sample No. 6 was a silicon nitride sintered body described in JP 6822362 B. A manufacturing method of Sample No. 6 was as follows. 89.0 wt% of Si powder, 1.2 wt% of Y₂O₃, and 9.8 wt% of MgO were mixed, and thus a raw material powder was obtained. To this raw material powder, 0.5 wt% of a dispersing agent (sorbitan trioleate) with respect to the total amount of the dispersion medium (toluene) and the raw material powder was added to form a slurry having a concentration of 42 wt%. The slurry was ground for 24 hours by using ball milling and a 5ϕ ball made of silicon nitride as a medium.

The obtained slurry was subjected to concentration adjustment by adding a dispersion medium and an organic binder (acrylic resin) and degassing treatment, and thus a coating in a slurry form was obtained. This slurry for coating was made into a sheet shape by a doctor blade method, and thus a sheet-shaped molded body was obtained. After the obtained sheet-shaped molded body was degreased, the obtained sheet-shaped molded body was nitrided in a crucible made of boron nitride (BN) at 1450°C in a nitrogen atmosphere (nitrogen partial pressure: 0.1 MPa) for 10 hours, and continuously fired in the crucible made of BN at 1900°C in a nitrogen atmosphere (nitrogen partial pressure: 0.9 MPa) for 12 hours. Thus, Sample No. 6 was obtained.

Sample No. 7 was a silicon nitride sintered body described in JP 6297188 B. A manufacturing method of Sample No. 7 was as follows. 95.0 wt% of Si₃N₄ powder, 3 wt% of Y₂O₃, and 2 wt% of MgO were mixed, and thus a raw material powder was obtained. In the raw material powder, a dispersing agent and an organic solvent were mixed and mixed by ball milling. Then, with respect to 100 parts by mass of the raw material powder, 10 parts by mass of butyl methacrylate as an organic binder and 4 parts by mass of dibutyl phthalate as a plasticizer were mixed, an organic solvent was additionally added, mixing by ball milling was adequately performed, and thus a raw material mixture in a slurry form was prepared. After the viscosity of the slurry was adjusted to 5000 to 15000 cps, sheet molding was performed by a sheet molding method (doctor blade method) and dried, and thus a molded body (green sheet) was prepared. The molded body was subjected to a degrease process by heating at temperature of 500 to 800°C for 1 to 4 hours in a nitrogen gas atmosphere. Then, the degrease-treated molded body was fired at 1900°C in a nitrogen atmosphere for 9 hours, and thus Sample No. 7 was obtained.

### [Table 1]

**TABLE 1**

| Sample No. | Si₃N₄ powder (wt%) | Si powder (wt%) | Y₂O₃ (wt%) | MgO (wt%) | Nitriding temperature (°C) | Nitriding time (hr) | Nitrogen partial pressure during nitriding (MPa) | Firing temperature (°C) | Firing time (hr) | Nitrogen partial pressure during firing (MPa) |
|---|---|---|---|---|---|---|---|---|---|---|
| 1 | 23.4 | 70.2 | 4.9 | 1.5 | 1350 | 15 | 0.6 | 1925 | 12 | 0.6 |
| 2 | 23.4 | 70.2 | 4.9 | 1.5 | 1350 | 15 | 0.6 | 1945 | 12 | 0.6 |
| 3 | 23.4 | 70.2 | 4.9 | 1.5 | 1350 | 15 | 0.6 | 1900 | 12 | 0.6 |
| 4 | 23.4 | 70.2 | 4.9 | 1.5 | 1350 | 15 | 0.3 | 1925 | 12 | 0.3 |
| 5 | 23.4 | 70.2 | 4.9 | 1.5 | 1350 | 15 | 0.6 | 1925 | 6 | 0.6 |
| 6 | 0.0 | 89.0 | 1.2 | 9.8 | 1450 | 10.0 | - | 1900 | 12 | - |
| 7 | 95.0 | 0.0 | 3.0 | 2.0 | - | - | - | 1900 | 9 | - |
| 8 | 65.5 | 21.9 | 11.9 | 0.7 | 1100-1400 | 40 | Normal pressure | 1900 | 12 | 0.7 |

Component analysis was performed for the Si₃N₄ powder, the Si powder, the Y₂O₃, and the MgO, which were used as the raw materials for Samples No.1 to No. 5 and No. 8 as Examples. The results are listed in Tables 2 to 4. For the Si₃N₄ powder, X-ray fluorescence (XRF) analysis and ICP emission spectrochemical analysis were performed (Table 2). For the Si powder, the Y₂O₃, and the MgO, X-ray fluorescence (XRF) analysis was performed (Table 3 and Table 4).

### [Table 2]

**TABLE 2**

| Type | | Si₃N₄ | |
|---|---|---|---|
| Analysis method | | XRF | ICP |
| Content (wt%) | Si₃N₄ | 99.9 | 99.813 |
| | Al₂O₃ | <0.1 | 0.087 |
| | CaO | <0.1 | 0.083 |
| | Fe₂O₃ | <0.1 | 0.017 |

### [Table 3]

**TABLE 3**

| Type | | Si |
|---|---|---|
| | O | 0.6 |
| | Na | |
| | Al | |
| | Si | 99 |
| | Cl | |
| | Ca | |
| | Ti | |
| XRF (wt%) | Cr | |
| | Mn | |
| | Fe | <0.1 |
| | Ni | <0.1 |
| | Cu | |
| | Zr | |
| | S | |
| | P | |
| | K | <0.1 |

### [Table 4]

**TABLE 4**

| Type | | Y₂O₃ | MgO |
|---|---|---|---|
| | Si₃N₄ | | |
| | SiO₂ | <0.1 | 1.9 |
| | O | | |
| | P₂O₅ | | |
| | K₂O | | |
| | NiO | | |
| | CuO | | |
| | Na₂O | | |
| | Al₂O₃ | | 0.2 |
| XRF (wt%) | CaO | | 1 |
| | TiO₂ | | |
| | Cr₂O₃ | <0.1 | |
| | AsO | | |
| | MgO | | 96.4 |
| | Y₂O₃ | 100 | |
| | MnO | | |
| | Fe₂O₃ | <0.1 | 0.1 |
| | B₂O₃ | | 0.4 |
| | CaF₂ | <0.1 | |

It was found that the Si₃N₄ powder, the Si powder, the Y₂O₃, and the MgO used as the raw materials each contained impurities listed in Table 2 to Table 4. Specifically, the Si₃N₄ powder contained Al₂O₃, CaO, and Fe₂O₃ in addition to the Si₃N₄. The Si powder contained O, Fe, Ni, K in addition to the Si. The Y₂O₃ contained SiO₂, Fe₂O₃, Cr₂O₃, and CaF₂. The MgO contained SiO₂, Al₂O₃, CaO, Fe₂O₃, and B₂O₃.

For Samples No. 1 to No. 5 as Examples, the obtained sample was ground, identification of a crystal phase was performed by using X-ray diffraction, and then a ratio of crystal phases was determined by the Rietveld method. The results are listed in Table 5.

### [Table 5]

**TABLE 5**

| | Rietveld (volume ratio) | | | | | | |
|---|---|---|---|---|---|---|---|
| Sample No. | β-SiN | Y₆Si₁₁N₂₀O (phase A) | YSi₃O₃N₄ (phase B) | Ratio phase A/phase B | Y₄Si₂O₇N₂ (phase C) | Y₂Si₃O₃N₄ (phase D) | Porosity (%) |
| 1 | 94.2 | 3.8 | 1.9 | 2.0 | - | - | 0.5 |
| 2 | 94.7 | 4.0 | 1.3 | 3.1 | - | - | 0.9 |
| 3 | 93.9 | 3.6 | 2.5 | 1.4 | - | - | 0.4 |
| 4 | 88.6 | 0.7 | 10.7 | 0.1 | - | - | 13.6 |
| 5 | 92.1 | 1.2 | 6.7 | 0.2 | - | - | 11.3 |
| 6 | - | - | - | - | - | - | 1.5 |
| 7 | - | - | - | - | - | - | - |
| 8 | 93.1 | - | - | - | 3 | 3.9 | 0.3 |

As indicated in Table 5, Samples No. 1 to No. 5 and No. 8 all contained silicon nitride particles and yttrium silicon oxynitride particles. Specifically, Samples No. 1 to No.5 contained β phase SiN as the silicon nitride particles. Samples No. 1 to No. 5 contained Y₆Si₁₁N₂₀O particles (phase A) and YSi₃O₃N₄ particles (phase B) as the yttrium silicon oxynitride particles. Sample No. 8 contained β phase SiN as the silicon nitride particles. Sample No. 8 contained Y₄Si₂O₇N₂ particles (phase C) and Y₂Si₃O₃N₄ particles (phase D) as the yttrium silicon oxynitride particles.

The ratios (phase A/phase B) in terms of volume ratio of the phase A to the phase B were "2.0" for Sample No. 1, "3.1" for Sample No. 2, "1.4" for Sample No. 3, "0.1" for Sample No. 4, and "0.2 for Sample No. 5".

### (Porosity)

For Samples No. 1 to No. 5 and No. 8, after each of the samples was polished, a photograph of a surface of the polished surface was taken by using an electron microscope, and pores present in a unit area (20 µm × 20 µm) in the obtained photograph were extracted. Then, an area of extracted pores was determined by image analysis, and an area ratio with respect to the unit area was determined.

As indicated in Table 5, the porosities of Samples No. 1 to No. 5 and No. 8 were "0.5%" for Sample No. 1, "0.9%" for Sample No. 2, "0.4%" for Sample No. 3, "13.6%" for Sample No. 4, "11.3%" for Sample No. 5, and "0.3%" for Sample No. 8. Note that the porosity of Sample No. 6 that was Comparative Example was "1.5%".

### (Coefficient of Thermal Conductivity)

For Samples No. 1 to No. 5 and No. 8, a 10 mm square test piece having a thickness of 0.32 mm was cut out from each of the samples, and a coefficient of thermal conductivity in the thickness direction was measured for the cut-out test piece by using the laser flash method. The measurement temperature was at room temperature, 100°C, and 200°C. The results are listed in Table 6.

### [Table 6]

**TABLE 6**

| Sample No. | Thermal conductivity | | | Reduction rate | | Ceramic property | | |
|---|---|---|---|---|---|---|---|---|
| | RT (W/m·K) | 100°C (W/m·K) | 200°C (W/m·K) | (RT - 100)/RT (%) | (RT - 200)/RT (%) | Fracture toughness (MPa·m^{1/2}) | Isolation voltage (kV) | Three-point bending strength (MPa) |
| 1 | 94 | 72 | 55 | 23% | 41% | 7.1 | 12 | 613 |
| 2 | 96 | 74 | 57 | 23% | 41% | 7.5 | 12 | 602 |
| 3 | 86 | 67 | 49 | 22% | 43% | 7.3 | 11 | 604 |
| 4 | 76 | 57 | 42 | 25% | 45% | 6.7 | 10 | 534 |
| 5 | 81 | 61 | 47 | 25% | 42% | 6.5 | 11 | 521 |
| 6 | 123 | 86 | 62 | 30% | 50% | 6.3 | 11 | 716 |
| 7 | 90 | 63 | 45 | 30% | 50% | 6.4 | 11 | 600 |
| 8 | 88 | 62 | 44 | 30% | 50% | 6.2 | 11 | 748 |

As indicated in Table 6, the coefficients of thermal conductivity at room temperature were "94 W/m·K" for Sample No. 1, "96 W/m·K" for Sample No. 2, "86 W/m·K" for Sample No. 3, "76 W/m K" for Sample No. 4, "81 W/m K" for Sample No. 5, and "88 W/m K" for Sample No. 8. Note that the coefficients of thermal conductivity for Samples No. 6 and No. 7, which were Comparative Examples, were respectively "123 W/m K" and "90 W/m·K".

The coefficients of thermal conductivity at 100°C were "72 W/m K" for Sample No. 1, "74 W/m K" for Sample No. 2, "67 W/m K" for Sample No. 3, "57 W/m K" for Sample No. 4, "61 W/m K" for Sample No. 5, and "62 W/m K" for Sample No. 8. Note that the coefficients of thermal conductivity at 100°C for Samples No. 6 and No. 7, which were Comparative Examples, were respectively "86 W/m·K" and "63 W/m·K". The coefficients of thermal conductivity at 200°C were "55 W/m·K" for Sample No. 1, "57 W/m K" for Sample No. 2, "49 W/m K" for Sample No. 3, "42 W/m K" for Sample No. 4, "47 W/m K" for Sample No. 5, and "44 W/m K" for Sample No. 8. Note that the coefficients of thermal conductivity at 100°C for Samples No. 6 and No. 7, which were Comparative Examples, were respectively "62 W/m·K" and "45 W/m K".

As described above, it was found that Samples No. 1 to No. 5 and No. 8, which were Examples of the present disclosure, each maintained a high coefficient of thermal conductivity even in a high temperature environment. That is, Samples No. 1 to No. 5 and No. 8, which are Examples, are suitable for use in a high temperature environment because a high heat dissipation performance can be maintained in a high temperature environment.

Note that Sample No. 6, which was Comparative Example, had a higher coefficient of thermal conductivity at 100°C than those of Samples No. 1 to No. 5 and No. 8, which were Examples. Sample No. 7, which was Comparative Example, had a higher coefficient of thermal conductivity at 100°C than that of Sample No. 5, which was Example.

However, Samples No. 6 and No. 7 each had the reduction rate ((RT - 100)/RT) of 30%, and had a large rate of change in the coefficient of thermal conductivity of the raw material when the temperature was changed in a range of room temperature (RT, 25°C) to 100°C. Accordingly, for example, in a case where a power element is mounted on a substrate produced by using Samples No. 6 and No. 7, a rate of change of the temperature of the power element may be large when the power element is operated. As a result, stable operation of the power element is impaired, and output values of the power module tend to vary, and thus stable operation becomes difficult.

On the other hand, although Samples No. 1 to No. 5 each had a lower coefficient of thermal conductivity than that of Sample No. 6 at room temperature, at 100°C, and at 200°C, because rates of changes in the coefficients of thermal conductivity from room temperature to 100°C and from room temperature to 200°C were small, stable operation of a power module as well as stable operation of a power element can be expected.

Because Samples No. 1 to No. 5 each had a higher fracture toughness than those of Samples No. 6 and No. 7, damages are less likely to occur due to temperature changes of a power element itself.

### (Fracture Toughness)

For Samples No. 1 to No. 5 and No. 8, fracture toughness measurement by the IF method was performed. The fracture toughness measurement was in accordance with JIS R 1607-1995, and the fracture toughness was measured by injecting a Vickers indenter into a test piece having undergone mirror polishing and determined based on a length of caused indentation and crack. The indentation load was 98 N (= 10 kgf), and the indentation time was 15 sec.

As indicated in Table 6, the fracture toughness of Samples No. 1 to No. 5 and No. 8 were "7.1 MPa·m^{1/2}" for Sample No. 1, "7.5 MPa·m^{1/2}" for Sample No. 2, "7.3 MPa·m^{1/2}" for Sample No. 3, "6.7 MPa·m^{1/2}" for Sample No. 4, "6.5 MPa·m^{1/2}" for Sample No. 5, and "6.2 MPa·m^{1/2}" for Sample No. 8. For Sample No. 6 was 6.3 MPa·m^{1/2}, and for Sample No. 7 was 6.4 MPa·m^{1/2} .

### (Isolation Voltage)

The isolation voltage was measured for Samples No. 1 to No. 5 and Sample No. 8. The isolation voltage was measured by forming brass electrodes on top and bottom faces of a substrate having a thickness of 0.32 mm and applying a voltage in between the electrodes.

As indicated in Table 6, the isolation voltages of Samples No. 1 to No. 5 and No. 8 were "12 kV" for Sample No. 1, "12 kV" for Sample No. 2, "11 kV" for Sample No. 3, "10 kV" for Sample No. 4, "11 kV" for Sample No. 5, and "11 kV" for Sample No. 8. Note that the isolation voltages for Samples No. 6 and No. 7, which were Comparative Examples, were respectively "11 kV" and "11 kV".

### (Three-Point Bending Strength)

For Samples No. 1 to No. 5 and No. 8, the three-point bending strength in accordance with JIS R 1601 at room temperature was measured.

As indicated in Table 6, the three-point bending strength of Samples No. 1 to No. 5 and No. 8 were "613 MPa" for Sample No. 1, "602 MPa" for Sample No. 2, "604 MPa" for Sample No. 3, "534 MPa" for Sample No. 4, "521 MPa" for Sample No. 5, and "748 MPa" for Sample No. 8. Note that the three-point bending strength for Samples No. 6 and No. 7, which were Comparative Examples, were respectively "716 MPa" and "600 MPa".

As described above, it was found that Samples No. 1 to No. 5 and No. 8, which were Examples of the present disclosure, each achieved excellent magnetic properties.

As described above, the silicon nitride sintered body according to an embodiment contains the silicon nitride particles (SiN as an example) and the yttrium silicon oxynitride particles (Y₆Si₁₁N₂₀O particles and YSi₃O₃N₄ particles). The silicon nitride sintered body has a porosity of 14% or less. Thus, according to the silicon nitride sintered body of an embodiment, a silicon nitride sintered body that is more suitable for use in a high temperature environment is provided.

Note that the embodiments disclosed herein are exemplary in all respects and not restrictive. The aforementioned embodiments can be embodied in a variety of forms. The aforementioned embodiments may be omitted, substituted or changed in various forms without departing from the scope and spirit of the appended claims.

## Claims

1. A silicon nitride sintered body comprising:
silicon nitride particles; and
yttrium silicon oxynitride particles,
the silicon nitride sintered body having a porosity of 14% or less.

2. The silicon nitride sintered body according to claim 1, wherein the yttrium silicon oxynitride particles comprise at least one selected from the group consisting of Y₆Si₁₁N₂₀O particles, YSi₃O₃N₄ particles, Y₄Si₂O₇N₂ particles, and Y₂Si₃O₃N₄ particles.

3. The silicon nitride sintered body according to claim 2, wherein the yttrium silicon oxynitride particles comprise two selected from the group consisting of Y₆Si₁₁N₂₀O particles, YSi₃O₃N particles, Y₄Si₂O₇N₂ particles, and YSi₃O₃N₄ particles.

4. The silicon nitride sintered body according to claim 3, wherein the Y₆Si₁₁N₂₀O particles/the YSi₃O₃N₄ particles is 1.4 or more in volume ratio.

5. The silicon nitride sintered body according to claim 4, wherein the Y₆Si₁₁N₂₀O particles/the YSi₃O₃N₄ particles is 2.0 or more in volume ratio.

6. The silicon nitride sintered body according to claim 5, wherein the Y₆Si₁₁N₂₀O particles/the YSi₃O₃N₄ particles is 3.0 or more in volume ratio.

7. The silicon nitride sintered body according to any one of claims 1 to 6, wherein
a fracture toughness is 6.5 MPa·m^{1/2} or more,
an isolation voltage is 10 kV or more, and
a three-point bending strength is 521 MPa or more.
